# EUROPÄISCHE PATENTSCHRIFT

(11) **EP 1 669 616 B1**
(45) Veröffentlichungstag und Bekanntmachung des Hinweises auf die Patenterteilung: **16.01.2008**
(21) Anmeldenummer: 05026282.3
(22) Anmeldetag: 02.12.2005
(51) Int. Cl.: F16C 1/22, F16C 1/12

(54) **Betätigungszug**
Control cable
Câble flexible

(30) Priorität: 10.12.2004 DE 202004019232 U
(43) Veröffentlichungstag der Anmeldung: 14.06.2006
(73) Patentinhaber: Dura Automotive Systems GmbH, 40549 Düsseldorf (DE)
(72) Erfinder: Vanselow, Ottwald, D-50170 Kerpen (DE); Nellen, Peter, D-47228 Duisburg (DE)
(74) Vertreter: Paul, Dieter-Alfred

(56) Entgegenhaltungen:
- EP-A2- 0 774 591
- EP-B1- 0 589 269
- DE-A1- 19 730 683
- FR-A1- 2 805 585

## Beschreibung

Die Erfindung betrifft einen Betätigungszug mit einem Betätigungsmantel und einer darin verschieblich geführten Betätigungsseele mit folgenden Merkmalen:
a) Der Betätigungszug hat einen ersten Betätigungszugabschnitt mit einem ersten Mantelabschnitt und einem ersten Seelenabschnitt;
b) der Betätigungszug hat wenigstens einen zweiten Betätigungszugabschnitt mit jeweils einem zweiten Mantelabschnitt und einem zweiten Seelenabschnitt;
c) die beiden Seelenabschnitte sind über eine Kupplungseinrichtung verbunden;
d) die Kupplungseinrichtung weist ein Kupplungsgehäuse auf;
e) das Kupplungsgehäuse wird von einem Durchgangskanal durchsetzt, in dem die Betätigungsseele verläuft;
f) zu dem Durchgangskanal gehört ein Kupplungsraum, in dem die Seelenabschnitte über ein darin verschiebliches Kupplungsorgan verbunden sind;
g) der Kupplungsraum ist über einen Deckel öffenbar und schließbar;
h) im Bereich der Enden des Durchgangskanals stützen sich die Mantelabschnitte ab;
i) die Kupplungseinrichtung weist eine Einstelleinrichtung für die Einstellung der wirksamen Länge des Betätigungsmantels auf.

Insbesondere bei Kraftfahrzeugen werden eine Reihe von Betätigungsfunktionen mit Hilfe von Betätigungszügen durchgeführt, da sie einfach und robust sind, geringes Gewicht haben und im Regelfall problemlos verlegt werden können. Dabei besteht ein Betätigungszug im Grundsatz aus zwei Teilen, nämlich einem schlauchförmigen Betätigungsmantel und einer darin geführten Betätigungsseele, die meist als litzenartiger Drahtzug ausgebildet ist. An beiden Enden des Betätigungsmantels steht die Betätigungsseele vor und hat dort Anschlußstücke, mit denen das eine Ende an einem Betätigungsorgan und das andere Ende an einem zu betätigenden Organ befestigt werden kann. Solche Organe können beispielsweise Drosselklappen, Raupenschlösser oder Wechselgetriebe sein.

Um die Montage eines längeren Betätigungszuges zu vereinfachen oder eine Vormontage zu ermöglichen, hat man den Betätigungszug in zwei - oder auch mehr - Betätigungszugabschnitte aufgeteilt und die Betätigungszugabschnitte mittels einer Kupplungseinrichtung verbunden (vgl. DE-G 90 12 668.8). Diese Aufteilung hat auch die Möglichkeit eröffnet, einen ersten Betätigungszugabschnitt in der Kupplungseinrichtung mit zwei parallelen zweiten Betätigungszugabschnitten zu verbinden, wobei der erste Betätigungszugabschnitt mit einem Betätigungsorgan und die zwei zweiten Betätigungszugabschnitte mit gleichzeitig zu betätigenden Organen, beispielsweise den Türschlössern bei Fahrzeugen, verbunden werden (vgl. DE 198 16 991 A1). Dabei besteht grundsätzlich auch die Möglichkeit, mehr als zwei zweite Betätigungszugabschnitte anzuschließen.

Daneben ist es bekannt, Betätigungszüge an einem der beiden Enden mit einer Einstelleinrichtung zu versehen, über die sich die wirksame Länge des Betätigungsmantels so einstellen läßt, daß der Betätigungszug spielfrei arbeitet und der Bewegungsbereich des Betätigungsorgans voll ausgenutzt wird. Eine solche Einstelleinrichtung ist beispielsweise in der DE 196 20 496 A1 offenbart.

Andere Einstelleinrichtungen arbeiten selbsteinstellend, d.h. die wirksame Länge des Betätigungsmantels stellt sich selbst bei Betätigen des zu betätigenden Organs über den vollen Bewegungsbereich ein. Die EP 0 589 269 B1 zeigt eine solche Selbsteinstelleinrichtung in Kombination mit einem zweigeteilten Betätigungszug, bei dem die Betätigungszugabschnitte über eine Kupplungseinrichtung miteinander verbunden sind. Eine solche Selbsteinstelleinrichtung ist jedoch in vielen Fällen nicht einsetzbar.

Der Erfindung liegt die Aufgabe zugrunde, einen mehrteiligen Betätigungszug so auszubilden, daß die Einstellung der wirksamen Länge des Betätigungsmantels schnell, zuverlässig und mit einfachen Mitteln durchgeführt werden kann.

Diese Aufgabe wird erfindungsgemäß durch einen Betätigungszug der eingangs genannten Art mit folgenden Merkmalen gelöst:
j) die Einstelleinrichtung weist einen in dem Kupplungsgehäuse verschieblich geführten Einstellschlitten auf;
k) an dem Einstelllschlitten stützt sich der erste Mantelabschnitt ab;
1) der Einstellschlitten ist über eine sich an dem Kupplungsgehäuse abstütztenden Spreizfeder federbeaufschlagt;
m) der Einstellschlitten und der Deckel weisen komplentäre Eingriffsmittel auf, die in Offenstellung des Deckels außer Eingriff sind und beim Schließen des Deckels derart in Eingriff kommen, daß der Einstellschlitten in der jeweiligen Stellung blockiert ist.

Grundgedanke der Erfindung ist es also, die Kupplungseinrichtung mit einer federbeaufschlagten Einstelleinrichtung derart zu kombinieren, daß die Einstelleinrichtung nach der Einstellung durch Schließen des Deckels der Kupplungseinrichtung fixiert wird. Durch den ohnehin durchzuführenden Vorgang des Schließen des Deckels ist damit automatisch gesichert, daß die Einstellung der wirksamen Länge des Drahtzugmantels gesichert ist. Die Kombination beider Teile ergibt eine einfache und sicher zu handhabende Konstruktion.

In bevorzugter Ausbildung der Erfindung ist vorgesehen, daß sich die Einstelleinrichtung an den Kupplungsraum anschließt und sich der Deckel auch über die Einstelleinrichtung erstreckt. Dies kann in der Weise geschehen, daß das Kupplungsgehäuse aus einem ersten Gehäuseabschnitt mit dem Kupplungsraum und aus einem zweiten Gehäuseabschnitt mit der Einstelleinrichtung zusammengesetzt ist. Die Verbindung beider Gehäuseabschnitte kann beispielsweise durch Zusammenklippen oder dergleichen geschehen.

Der Deckel des Kupplungsgehäuses ist zweckmäßigerweise - wie an sich bekannt - als Klappdeckel ausgebildet. Die Klappachse kann dabei parallel zu der Betätigungsseele erfolgen (vgl. EP 0 589 269 B1). Zweckmäßig ist jedoch eine Ausführungsform, bei der der Klappdeckel um eine sich quer zur Achse des Durchgangskanals erstreckende Schwenkachse klappbar ist, wobei die Schwenkachse an dem der Einstelleinrichtung entfernt liegenden Ende gelagert ist.

Die Eingriffsmittel können beispielsweise als Eingriffszähne ausgebildet sein, die in Eingriffstellung verzahnungsartig ineinandergreifen. Es kommen jedoch auch andere Eingriffsmittel in Frage. Zweckmäßigerweise sollten der Einstellschlitten und Deckel beidseitig Eingriffsmittel aufweisen und die Eingriffsmittel in Eingriffsstellung mit beiden Seiten in Eingriff stehen.

Nach einem weiteren vorteilhaften Merkmal der Erfindung ist vorgesehen, daß der Deckel das Kupplungsgehäuse obenseitig abschließt und an beiden Seiten das Kupplungsgehäuse außenseitig überlappt, um dort mit dem Kupplungsgehäuse verbunden zu werden. Ferner kann vorgesehen sein, daß der Deckel wenigsten einen einseitig vorstehenden Eingriffssteg mit den Eingriffsmitteln aufweist.

Schließlich können nach der Erfindung des weiteren wenigsten zwei zweite Betätigungsabschnitte vorhanden sein, deren Betätigungsseelen gemeinsam über das Kupplungsorgan mit der ersten Betätigungsseele gekoppelt sind, um ein System zu haben, wie es aus der DE 198 16 991 A1 bekannt ist.

In der Zeichnung ist die Erfindung anhand eines Ausführungsbeispiels näher veranschaulicht. Es zeigen:
- Figur 1: einen Längsschnitt durch die erfindungsgemäße Kupplungseinrichtung mit Offenstellung deren Klappdeckels;
- Figur 2: den Längsschnitt gemäß Figur 1 mit Schließstellung des Klappdeckels und
- Figur 3: einen Längsschnitt durch die Kupplungseinrichtung in der Stellung gemäß Figur 2, jedoch gegenüber Figur 2 um 90° verdreht.

Die in Figuren dargestellte Kupplungseinrichtung 1 weist ein Kupplungsgehäuse 2 auf, das untenseitig zwei Halteclips 3, 4 aufweist, über die die Kupplungseinrichtung 1 beispielsweise mit einem Halteblech verbunden werden kann, indem die Halteclips 3, 4 in passende Löcher des Halteblechs eingesetzt werden. Das Kupplungsgehäuse 2 besteht aus einem ersten Gehäuseabschnitt 5 und einem zweiten Gehäuseabschnitt 6, die beide in einem verbindungsbereich 7 ineinandergeklippt und auf diese Weise miteinander verbunden sind.

Durch das Kupplungsgehäuse 2 verläuft eine als Drahtlitze ausgebildete Betätigungsseele 8, die in einen ersten Seelenabschnitt 9 und einen zweiten Seelenabschnitt 10 aufgeteilt ist. Die beiden Seelenabschnitte 9, 10 sind nur im Bereich der Kupplungseinrichtung 1 dargestellt und verlängern sich nach beiden Seiten hin bis zu ihren jeweiligen Enden, wobei das freie Ende des ersten Seelenabschnitts 9 mit einem Betätigungsorgan und das freie Ende des zweiten Seelenabschnitts 10 mit einem zu betätigenden Organ verbunden sind. Die Seelenabschnitte 9, 10 sind innerhalb eines Kupplungsraums 11 miteinander verbunden. Hierzu ist der zweite Seelenabschnitt 10 endseitig mit einem Kupplungsschlitten 12 verbunden, der in dem Kupplungsraum 11 axial verschieblich geführt ist. Der Kupplungsschlitten 12 weist eine Ausnehmung auf, in die ein verdicktes Ende 13 des ersten Seelenabschnitts 9 eingesetzt ist.

Die beiden Seelenabschnitte 9, 10 sind jeweils von einem schlauchförmigen Mantelabschnitt 14, 15 umgeben, wobei die Mantelabschnitte 14, 15 ebenfalls nur verkürzt dargestellt sind. Der zweite Mantelabschnitt 15 stützt sich in einer Bohrung 16 an dem Kupplungsgehäuse 2 ab. Der erste Mantelabschnitt 14 ragt in eine Bohrung 17 eines Einstellschlittens 18 hinein, der in dem zweiten Gehäuseabschnitt 10 axial verschieblich geführt ist und von einem Durchgangskanal 19 durchsetzt ist, durch den der erste Seelenabschnitt 9 verläuft. Zwischen Einstellschlitten 18 und Kupplungsgehäuse 2 befindet sich eine Spreizfeder 20, die bestrebt ist, den Einstellschlitten 18 in Richtung auf den ersten Mantelabschnitt 14 zu drücken.

Das Kupplungsgehäuse 2 weist einen Klappdeckel 21 auf, der am rechten Ende des Kupplungsgehäuses 2 über eine Klappachse 22 schwenkbar gelagert ist, die sich quer zur Richtung der Betätigungsseele 8 erstreckt. Der Klappdekkel 21 geht über die gesamte Länge des Kupplungsgehäuses 2 und hat eine Deckelwandung 23 und zwei Seitenwandungen 24, 25, die die Seitenwandungen des Kupplungsgehäuses im geschlossenen Zustand des Klappdeckels 21 außenseitig einfassen. In diesem Zustand dient er auch als vertikale Führung für den Kupplungsschlitten 12 und den Einstellschlitten 18.

Der Klappdeckel 21 weist im Bereich des Einstellschlittens 18 zwei parallel zueinander verlaufende, vertikale Eingriffsstege 26, 27 auf, die an den einander zugewandten Seiten Verzahnungen 28, 29 aufweisen. Der Einstellschlitten 18 weist an beiden Seiten komplementäre Verzahnungen 30, 31 auf. Beide jeweils komplementären Verzahnungen 28 und 30 bzw. 29 und 31 sind für den gegenseitigen Eingriff bei geschlossenem Klappdeckel 21 bestimmt.

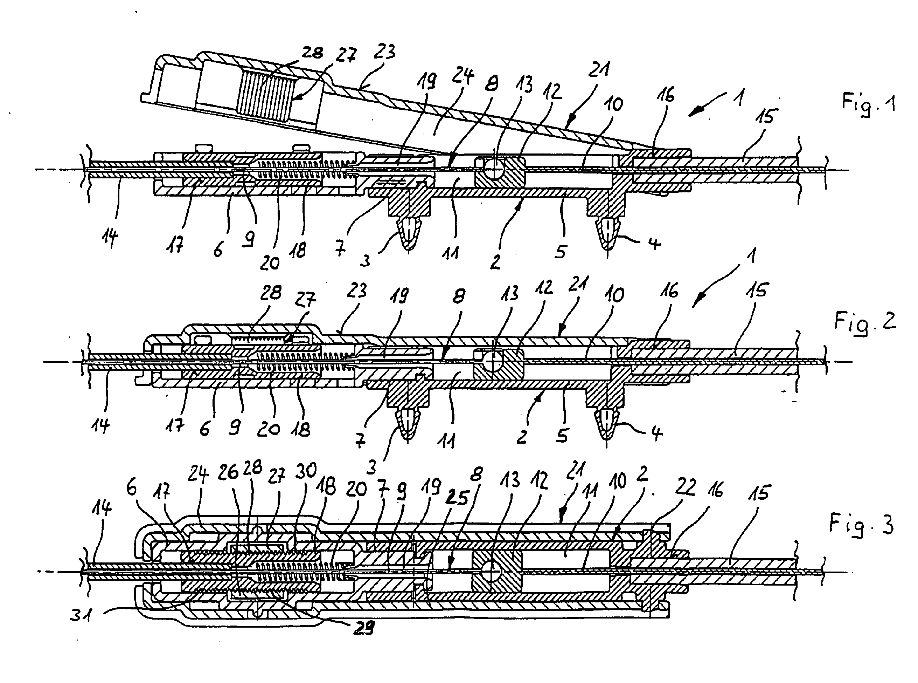

Der gesamte Betätigungszug mit der Kupplungseinrichtung 1 wird wie folgt montiert. Die aus ihren jeweiligen Mantelabschnitten 14, 15 herausragenden Endabschnitte der Seelenabschnitte 9, 10 werden einmal mit dem Betätigungsorgan und einmal mit dem zu betätigenden Organ verbunden. Dies geschieht bei geöffnetem Klappdeckel 21. Aufgrund der Spreizwirkung der Spreizfeder 20 wird dabei die wirksame Länge der beiden Mantelabschnitte 14, 15 eingestellt, indem die Mantelabschnitte 14, 15 unter Stauchspannung gesetzt werden. Dann wird der zunächst offene Klappdeckel 21 (Figur 1) in die in den Figuren 2 und 3 dargestellte Schließstellung geklappt, wodurch der Kupplungsraum 11 und auch der Raum mit dem Einstellschlitten 18 geschlossen werden. Dabei hinterfassen die Seitenwände 24, 25 des Klappdeckels 21 Vorsprünge und rasten in der Schließstellung ein. Gleichzeitig kommen die Verzahnungen 28, 29 an den Eingriffsstegen 26, 27 mit den Verzahnungen 30, 31 am Einstellschlitten 18 in Eingriff und fixieren auf diese Weise die Position des Einstellschlittens 18. Auf diese Weise werden mit einer einzigen Schließbewegung nicht nur das Kupplungsgehäuse 2 geschlossen, sondern auch der Einstellschlitten 18 festgelegt.

## Patentansprüche

1. Betätigungszug mit einem Betätigungsmantel und mit einer darin verschieblich geführten Betätigungsseele (8) mit folgenden Merkmalen:
a) Der Betätigungszug hat einen ersten Betätigungszugabschnitt mit einem ersten Mantelabschnitt (14) und einem ersten Seelenabschnitt (9);
b) der Betätigungszug hat wenigstens einen zweiten Betätigungszugabschnitt mit einem zweiten Mantelabschnitt (15) und einem zweiten Seelenabschnitt (10);
c) die beiden Seelenabschnitte sind über eine Kupplungseinrichtung (1) verbunden;
d) die Kupplungseinrichtung (1) weist ein Kupplungsgehäuse (2) auf;
e) das Kupplungsgehäuse (2) wird von einem Durchgangskanal (19) durchsetzt, in dem die Betätigungsseele (8) verläuft;
f) zu dem Durchgangskanal (19) gehört ein Kupplungsraum (11), in dem die Seelenabschnitte (9, 10) über ein darin verschiebliches Kupplungsorgan (12, 13) verbunden sind;
g) der Kupplungsraum (11) ist über einen Deckel (21) öffenbar und schließbar;
h) im Bereich der Enden des Durchgangskanals (19) stützen sich die Mantelabschnitte (14, 15) ab;
i) die Kupplungseinrichtung (1) weist eine Einstelleinrichtung für die Einstellung der wirksamen Länge des Betätigungsmantels auf,
**gekennzeichnet durch** folgende Merkmale:
j) die Einstelleinrichtung weist einen in dem Kupplungsgehäuse (2) verschieblich geführten Einstellschlitten (18) auf;
k) an dem Einstellschlitten (18) stützt sich der erste Mantelabschnitt (14) ab;
1) der Einstellschlitten (18) ist über eine sich an dem Kupplungsgehäuse (2) abstütztenden Spreizfeder (20) federbeaufschlagt;
m) der Einstellschlitten (18) und der Deckel (21) weisen komplentäre Eingriffsmittel (28 bis 31) auf, die in Offenstellung des Deckels (21) außer Eingriff sind und beim Schließen des Dekkels (21) derart in Eingriff kommen, daß der Einstellschlitten (18) in der jeweiligen Stellung blockiert ist.

2. Betätigungszug nach Anspruch 1, **dadurch gekennzeichnet, daß** sich die Einstelleinrichtung an dem Kupplungsraum (11) anschließt und sich der Deckel (21) auch über die Einstelleinrichtung erstreckt.

3. Betätigungszug nach Anspruch 2, **dadurch gekennzeichnet, daß** das Kupplungsgehäuse (2) aus einem ersten Gehäuseabschnitt (5) mit dem Kupplungsraum (11) und aus einem zweiten Gehäuseabschnitt (6) mit der Einstelleinrichtung zusammengesetzt ist.

4. Betätigungszug nach einem der Ansprüche 1 bis 3, **dadurch gekennzeichnet, daß** der Deckel als Klappdeckel (21) ausgebildet ist.

5. Betätigungszug nach einem der Ansprüche 1 bis 4, **dadurch gekennzeichnet, daß** der Deckel (21) um eine sich quer zur Achse des Durchgangskanals (19) erstreckende Schwenkachse (22) gelagert ist.

6. Betätigungszug nach einem der Ansprüche 1 bis 5 **dadurch gekennzeichnet, daß** die Eingriffsmittel als Eingriffszähne (28 bis 31) ausgebildet sind, die in Eingriffsstellung verzahnungsartig ineinandergreifen.

7. Betätigungszug nach einem der Ansprüche 1 bis 6, **dadurch gekennzeichnet, daß** der Einstellschlitten (18) und der Deckel (21) beidseitig Eingriffsmittel (28 bis 31) aufweisen, die in Eingriffsstellung mit beiden Seiten im Eingriff stehen.

8. Betätigungszug nach einem der Ansprüche 1 bis 7, **dadurch gekennzeichnet, daß** der Deckel (21) das Kupplungsgehäuse (2) obenseitig abschließt und an beiden Seiten das Kupplungsgehäuse (2) außenseitig überlappt.

9. Betätigungszug nach Anspruch 8, **dadurch gekennzeichnet, daß** der Deckel (21) wenigstens einen innenseitig vorstehenden Eingriffssteg (26, 27) mit Eingriffsmitteln (28 bis 31) aufweist.

10. Betätigungszug nach einem der Ansprüche 1 bis 9, **dadurch gekennzeichnet, daß** wenigstens zwei zweite Betätigungszugabschnitte vorhanden sind, deren Betätigungsseelen gemeinsam über das Kupplungsorgan mit der ersten Betätigungsseele gekoppelt sind.

## Claims

1. Control cable with a casing and a core (8), which can be moved in it, with the following characteristics:
a) The control cable has a first control cable section with a first casing section (14) and a first core section (9);
b) the control cable has at least a second control cable section with a second cover section (15) and a second core section (10);
c) both core sections are connected through a coupling device (1);
d) the coupling device (1) has a coupling housing (2);
e) the coupling housing (2) has a through channel (19) going through it, in which the core (8) runs;
f) the through channel (19) has a coupling area (11), in which the core sections (9, 10) are connected through a coupling device (12, 13), which can be moved in it;
g) the coupling area (11) can be opened and closed through a cover (21);
h) the casing sections (14, 15) are supported in the area of the ends of the through channel (19);
i) the coupling device (1) has an adjustment device for adjusting the effective length of the casing,
**characterised by** the following characteristics:
j) the adjustment device has an adjustment slide (18), which can be moved in the coupling housing (2);
k) the first casing section (14) is supported on the adjustment slide (18);
I) the adjustment slide (18) is spring loaded through a bracing spring (20) supported on the coupling housing (2);
m) the adjustment slide (18) and the cover (21) have complementary means of engagement (28 to 31), which are not engaged when the cover (21) is in the open position and engage when the cover (21) is closed in such a way that the adjustment slide (18) is blocked in the relevant position.

2. Control cable according to claim 1, **characterised in that** the adjustment device is connected to the coupling area (11) and the cover (21) also extends over the adjustment device.

3. Control cable according to claim 2, **characterised in that** the coupling housing (2) is made up of a first housing section (5) with the coupling area (11) and a second housing section (6) with the adjustment device.

4. Control cable according to one of claims 1 to 3, **characterised in that** the cover is made as a hinged cover (21).

5. Control cable according to one of claims 1 to 4, **characterised in that** the cover (21) is housed around a swivel axis (22) extending crosswise to the axis of the through channel (19).

6. Control cable according to one of claims 1 to 5, **characterised in that** the means of engagement are made as engagement teeth (28 to 31), which engage with each other by interlocking in the engagement position.

7. Control cable according to one of claims 1 to 6, **characterised in that** the adjustment slide (18) and the cover (21) have means of engagement (28 to 31) on both sides, which engage with both sides in the engagement position.

8. Control cable according to one of claims 1 to 7, **characterised in that** the cover (21) closes off the coupling housing (2) on the top and overlaps the coupling housing (2) on both sides on the outside.

9. Control cable according to claim 8, **characterised in that** the cover (21) has at least one engagement stud (26, 27) projecting inside with means of engagement (28 to 31).

10. Control cable according to one of claims 1 to 9, **characterised in that** there are at least two second control cable sections, the cores of which are coupled jointly to the first cores via the coupling device.

## Revendications

1. Câble d'actionnement comprenant une gaine dans laquelle coulisse une âme flexible (8) et présentant les caractéristiques suivantes :
a) le câble d'actionnement comprend un premier segment de câble d'actionnement constitué d'un premier segment de gaine (14) et d'un premier segment d'âme (9);
b) le câble d'actionnement comprend au moins un second segment de câble d'actionnement constitué d'un second segment de gaine (15) et d'un second segment d'âme (10) ;
c) les deux segments d'âme sont assemblés par un dispositif d'accouplement (1) ;
d) le dispositif d'accouplement (1) présente un boîtier d'accouplement (2) ;
e) le boîtier d'accouplement (2) est traversé par un canal de passage (19) dans lequel s'étend l'âme flexible (8) ;
f) un espace d'accouplement (11) fait partie du canal de passage (19), dans lequel les segments d'âme (9, 10) sont assemblés par l'intermédiaire d'un organe d'accouplement (12, 13) coulissant dans ledit espace ;
g) l'espace d'accouplement (11) peut être ouvert et fermé par le biais d'un couvercle (21) ;
h) les segments de gaine (14, 15) prennent appui dans la zone des extrémités du canal de passage (19) ;
i) le dispositif d'accouplement (1) présente un dispositif de réglage pour régler la longueur active de la gaine,
**caractérisé par** les caractéristiques suivantes:
j) le dispositif de réglage présente un coulisseau de réglage (18) coulissant dans le boîtier d'accouplement (2) ;
k) le premier segment de gaine (14) prend appui sur le coulisseau de réglage (18);
1) le coulisseau de réglage (18) est sollicité par un ressort écarteur (20) prenant appui sur le boîtier d'accouplement (2) ;
m) le coulisseau de réglage (18) et le couvercle (21) présentent des moyens d'engagement complémentaires (28 à 31) qui, lorsque le couvercle (21) est en position ouverte, sont désengagés et, lors de la fermeture du couvercle (21), se mettent en prise de telle sorte que le coulisseau de réglage (18) est bloqué dans la position dans laquelle il se trouve à ce moment-là.

2. Câble d'actionnement selon la revendication 1, **caractérisé en ce que** le dispositif de réglage fait suite à l'espace d'accouplement (11), et **en ce que** le couvercle (21) s'étend également sur le dispositif de réglage.

3. Câble d'actionnement selon la revendication 2, **caractérisé en ce que** le boîtier d'accouplement (2) est composé d'un premier segment de boîtier (5) abritant l'espace d'accouplement (11) et d'un second segment de boîtier (6) renfermant le dispositif de réglage.

4. Câble d'actionnement selon l'une des revendications 1 à 3, **caractérisé en ce que** le couvercle est réalisé en tant que couvercle rabattable (21).

5. Câble d'actionnement selon l'une des revendications 1 à 4, **caractérisé en ce que** le couvercle (21) est monté sur un axe de pivotement (22) s'étendant; transversalement à l'axe du canal de passage (19).

6. Câble d'actionnement selon l'une des revendications 1 à 5, **caractérisé en ce que** les moyens d'engagement sont réalisés sous la forme de dents (28 à 31) qui, en position engagée, engrènent les unes avec les autres à la manière d'un engrenage.

7. Câble d'actionnement selon l'une des revendications 1 à 6, **caractérisé en ce que** le coulisseau de réglage (18) et le couvercle (21) présentent des deux côtés des moyens d'engagement (28 à 31) qui, en position engagée, sont en prise des deux côtés.

8. Câble d'actionnement selon l'une des revendications 1 à 7, **caractérisé en ce que** le couvercle (21) ferme le boîtier d'accouplement (2).sur le dessus et déborde des deux côtés sur l'extérieur dudit boîtier d'accouplement (2).

9. Câble d'actionnement selon la revendication 8, **caractérisé en ce que** le couvercle (21) présente au moins une aile d'engagement (26, 27) faisant saillie vers l'intérieur, qui est dotée de moyens d'engagement (28 à 31).

10. Câble d'actionnement selon l'une des revendications 1 à 9, **caractérisé en ce que** sont prévus au moins deux seconds segments de câble d'actionnement dont les âmes flexibles sont accouplées à la première âme flexible par l'intermédiaire de l'organe d'accouplement.
